# EUROPEAN PATENT SPECIFICATION

(11) **EP 4 438 923 B1**
(45) Date of publication and mention of the grant of the patent: **28.10.2026**
(21) Application number: 24161629.1
(22) Date of filing: 06.03.2024
(51) Int. Cl.: F16H 57/04

(54) **A GEARSHIFTING MECHANISM, AN ELECTRIC DRIVE AXLE, AND AN OIL INJECTION CONTROL METHOD FOR SUCH GEARSHIFTING MECHANISM**
GANGSCHALTMECHANISMUS, ELEKTRISCHE ANTRIEBSACHSE UND ÖLEINSPRITZSTEUERUNGSVERFAHREN FÜR SOLCH EINEN GANGSCHALTMECHANISMUS
MÉCANISME DE CHANGEMENT DE VITESSE, ESSIEU MOTEUR ÉLECTRIQUE ET PROCÉDÉ DE COMMANDE D'INJECTION D'HUILE POUR UN TEL MÉCANISME DE CHANGEMENT DE VITESSE

(30) Priority: 30.03.2023 CN 202310333144
(43) Date of publication of application: 02.10.2024
(73) Proprietor: Robert Bosch GmbH, 70442 Stuttgart (DE)
(72) Inventor: CHEN, Huo, Jiangsu, 214028 (CN); WANG, Minzhu, Jiangsu, 214028 (CN)

(56) References cited:
- EP-A1- 4 071 982
- CN-A- 110 594 396
- CN-A- 113 074 243
- US-A- 4 961 669

## Description

### Technical Field

The present invention relates to a gearshifting mechanism and also relates to an electric drive axle comprising such gearshifting mechanism and an oil injection control method for such gearshifting mechanism.

### Background Art

In prior art, electric drive axles (particularly HD electric drive axles) are widely used in the field of electric vehicles. Typically, the electric drive axle comprises a transmission mechanism having a gearshifting mechanism housing.

As known to those skilled in the art, for a gearshifting mechanism, it is necessary to lubricate the associated rotating components, such as the gearshift shaft, to ensure that on one hand, they are cooled while operating normally to prevent overheating of various components and on the other hand, to lubricate the movement of the various components relative to each other to ensure smooth rotation of the various components, mitigating wear and tear or damage.

In particular, for a gearshifting mechanism, different gear positions of a vehicle may be selected by means of selecting different shifting gears disposed on the gearshift shaft, typically via the linking between the bearing (for example, a needle roller bearing) of the gearshift shaft and the shifting gear.

As is known to those skilled in the art, the bearing lubrication capabilities of a needle roller bearing, for example, directly affects the service life and efficiency of the gearshifting mechanism.

There are two known lubrication methods to ensure the lubrication effect on the gearshift shaft of the gearshifting mechanism: the first is immersion lubrication, which primarily involves immersing a gearshift shaft comprising shifting gears into an oil pool composed of lubricating oil injected by a lubricating oil into the housing of the gearshifting mechanism, which achieves the splashing of the lubricating oil by means of rotating the gears when the shifting gears rotate, such that the lubricating oil may be applied as much as possible to various other components; the other method involves splashing the lubricating oil at one end of the hollow gearshift shaft and dispersing the lubricating oil injected into the gearshift shaft in the various bearings (for example, needle roller bearing) of the gearshift shaft by means of the centrifugal force of gear shaft rotation.

There are significant drawbacks in the two lubrication methods described above: for the first lubrication method, because immersion lubrication requires a large amount of lubricating oil in the gearshifting mechanism housing (for example, more than 1/2 of the height of the gearshifting mechanism housing), it significantly increases the load on the vehicle itself (hence, there is a need to carry more lubricating oil); for the second lubrication method, there is a risk that the lubrication effect may be inadequate. This is as different gear positions induce changes corresponding to the rotational speed of the gearshift shaft accordingly and in the low-speed gear position, the rotational speed of the gearshift shaft is slow. Hence, the centrifugal force on the lubricating oil injected into the gearshift shaft is relatively low. Hence, the diffusion speed of the lubricating oil is slow and range of diffusion is relatively small. In some cases, only bearings nearer to the lubricating oil injection port are lubricated, and the lubrication effect on other unlubricated bearings is very poor.

US 4,961,669 discloses a spline connection that comprises a spline boss having inward spline teeth; and a spline shaft engaged slidably with the spline boss and having outward spline teeth is disclosed. A header passage for a lubricant is formed along a core of the spline shaft and oil passages are further formed in the spline shaft in such a manner as to pierce therethrough radially from the header passage. At least one of the outward spline teeth of the spline shaft is provided at the top thereof with a groove crossing transversely the outer spline tooth so as to have the open end of the oil passage disposed in the groove.

EP 4 071 982 A1 discloses a drive arrangement for a motor vehicle, comprising a housing with an engine compartment and a transmission compartment adjoining the engine compartment and delimited therefrom by an inner end wall, each delimited by said inner end wall, an associated outer end wall and a casing wall extending in the axial direction between the inner and the associated outer end wall; an electric machine arranged in the motor compartment with a stator fixed to the housing and a rotor arranged radially inside the stator with a hollow rotor shaft which passes through the inner end wall and the outer end wall of the motor compartment and is rotatably mounted in the motor compartment; and an active oil circuit with an oil pump, by means of which oil can be pumped from an oil reservoir through an oil distribution channel comprising at least a first branch into the interior of the hollow rotor shaft.

CN 110594396 A discloses a gearbox and a wind power generation device. The gearbox comprises a box body, a planetary gear mechanism and a lubricating mechanism, wherein the lubricating mechanism comprises an oil way arranged on a planet carrier and a hinge pin and an oil injection tube capable of synchronously rotating along with the planet carrier, and the oil injection port of the oil injection tube is provided with the meshing area of a gear ring and a planet wheel. According to the gearbox, lubricating oil can be led out from a lubricating oil pool of the gearbox box body through the arrangement of the lubricating mechanism, lubricating oil is injected into the meshing area of the gear ring and the planet wheel through the oil injection tube.

CN 113074243 A discloses a lubricating structure of a pure electric axle transmission system. The lubricating structure comprises an oil pump, a transmission shell, a first oil collecting ring and a second oil collecting ring, wherein the first oil collecting ring and the second oil collecting ring are fixedly arranged in an inner cavity of the transmission shell; an input shaft and an output shaft are respectively sleeved with the first oil collecting ring and the second oil collecting ring; a plurality of first radial through holes are formed in the first oil collecting ring and penetrate to the surface of the input shaft; a plurality of second radial through holes are formed in the second oil collecting ring and penetrate to the surface of the output shaft; a lubricating oil channel is formed in the speed change shell; an outlet of the lubricating oil channel communicates with the first radial through holes and the second radial through holes; an inlet of the lubricating oil channel communicates with an oil outlet of the oil pump; and an oil inlet of the oil pump is in butt joint with lubricating oil in the inner cavity of the transmission shell.

### Summary of the Invention

The invention is defined by the independent claims. The dependent claims define advantageous embodiments. According to a first aspect of the present invention, a gearshifting mechanism is provided, comprising at least shifting gears, a gearshift shaft, shifting synchronizers, gear bearings, and lubricating oil injection mechanisms, the shifting gears are socketed onto the gearshift shaft via the gear bearings, and the shifting gears engage and rotate with the gearshift shaft according to a desired gear position by means of the shifting synchronizers, wherein in the gearshift shaft, in the region opposite the gear bearings, one or a plurality of through-holes are disposed, allowing communication between the hollow cavity of the gearshift shaft and the gear bearings, and wherein the lubricating oil injection mechanisms are respectively disposed at both ends of the gearshift shaft, enabling bidirectional lubricating oil injection into the hollow cavity of the gearshift shaft.

According to another aspect of the present invention, an electric drive axle comprising the gearshifting mechanism as described above is provided, the gearshifting mechanism is mechanically disposed between a motor output shaft gear and a power output shaft gear of the electric drive axle, such that both ends of the gearshift shaft are free ends.

According to another aspect of the present invention, an oil injection control method for the gearshifting mechanism described above is provided, the method comprising obtaining the structural characteristic data of the gearshift shaft; obtaining the rotational speed of the gearshift shaft; obtaining the current temperature of the gear bearing of the currently selected gear position in the gearshift shaft; obtaining lubricating oil characteristics, which comprise, for example, the heat transfer coefficient, viscosity, and current temperature of the lubricating oil; obtaining the desired post-lubrication temperature of the gear bearing for the currently selected gear position in the gearshift shaft; determining, through a predetermined computational model, the injection volume and injection speed of the lubricating oil injected by the lubricating oil injection mechanisms and hence determining the corresponding oil flow rate and oil pressure output by the lubricating oil pump based on the obtained rotational speed of the gearshift shaft, the temperature of the gear bearing for the currently selected gear position in the gearshift shaft, the lubricating oil characteristics, the obtained desired post-lubrication temperature of the gear bearing for the currently selected gear position in the gearshift shaft, and the obtained structural characteristic data of the gearshift shaft.

By means of the gearshifting mechanism of the present invention and by means of disposing the lubricating oil injection mechanism at both ends of the gearshift shaft, it is ensured that the lubricating oil injected from two directions at both ends under high-speed rotation of the gearshift shaft is capable of adequately lubricating the through-holes nearer to the lubricating oil injection mechanisms, respectively, and the lubricating oil injected from two directions at both ends under high-speed rotation of the gearshift shaft is capable of more quickly lubricating the through-holes nearer thereto, respectively, allowing timely lubrication of all through-holes on the entire gearshift shaft 105.

### Description of Accompanying Drawings

These and other advantages of the present disclosure will now be described with reference to the accompanying drawings, which are for illustrative purposes only, wherein
FIG. 1 shows a schematic view of a gearshifting mechanism according to an example of the present invention; and

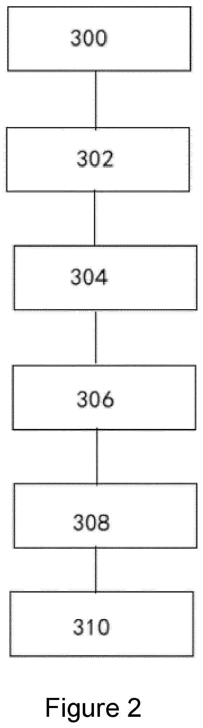

FIG. 2 shows a control method for controlling oil injection of a lubricating oil injection mechanism in a gearshifting mechanism according to the present invention.

### Specific Embodiments

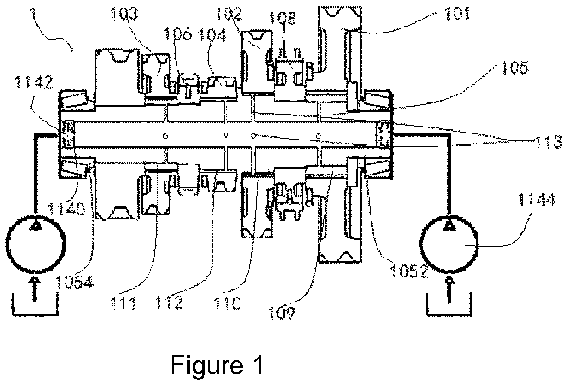

As shown in FIG. 1, a partial schematic view of a gearshifting mechanism 1 according to the present invention is shown. In order to highlight the focus of the present invention, in the context of the present invention, structures and constructions not related to the inventive aspects of the present disclosure are omitted, but those skilled in the art should understand that, while these structures and constructions are not described in detail in the context of the present application, they are still able to fit and combine properly with the parts of the present application in ways and methods known to those skilled in the art to achieve the overall function of the gearshifting mechanism 1 of the invention.

As shown in FIG. 1, the gearshifting mechanism 1 of the present application comprises at least shifting gears 101, 102, 103, 104, a gearshift shaft 105, shifting synchronizers 106, 108, gear bearings 109, 110, 111, 112, and lubricating oil injection mechanisms 113.

As shown in the example of FIG. 1, the shifting gears 101, 102, 103, 104 are socketed onto the gearshift shaft 105 via the gear bearings 109, 110, 111, 112. As an example, and as is known to those skilled in the art, the gear bearings 109, 110, 111, 112 are, for example, needle roller bearings. Since the branch 104 of the shifting gear 101 is sleeved onto the gearshift shaft 105 via the gear bearings 109 to 112, it is difficult for the lubricating oil injected outside of the gears to enter the gear bearings 109 to 112 to lubricate the gear bearings. The gearshift shaft 105 is a hollow shaft, wherein the gear shaft 105 is hollow between the two shaft ends. In other words, the gear shaft 105 is composed of a hollow drum shape.

As shown in FIG. 1, the rotation of the desired shifting gear is achieved by means of engaging the shifting synchronizers 106, 108 with the corresponding shifting gears 101 to 104. The shifting synchronizers 106, 108 are also sleeved onto the gearshift shaft 105 and are capable of translating along the gearshift shaft 105. As is known by those skilled in the art, the shifting synchronizers 106, 108 are engaged with the corresponding shifting gears, for example based on the gearshift operation and/or instruction of the driver or autonomous driving mechanism, such that the power from the motor is capable of being transmitted to the gearshift shaft 105 via the engagement of the corresponding shifting gear with the shifting synchronizer, allowing the gearshift shaft 105 to rotate. As is known by those skilled in the art, a shifting gear presently associated with the power output of the motor will be idle when no shifting synchronizer is engaged with the shifting gear. As shown by way of example and not limitation in FIG. 1, the gearshifting mechanism 1 in FIG. 1 comprises four gears, wherein the third gear (shifting gear 103), the fourth gear (shifting gear 104), the second gear (shifting gear 102), and the first gear (shifting gear 101), are sequentially (sequentially from left to right along the gearshift shaft 105 in the example in FIG. 1) socketed onto the gearshift shaft 105, and a shifting synchronizer is respectively disposed between the third gear (shifting gear 103) and the fourth gear (shifting gear 104), and between the second gear (shifting gear 102) and the first gear (shifting gear 101), such that the third gear (shifting gear 103) or fourth gear (shifting gear 104) respectively engages with the first shifting synchronizer 106 under the control thereof, and the second gear (shifting gear 102) or the first gear (shifting gear 101) respectively engages with the second shifting synchronizer 108 under the control thereof, thereby allowing different gear positions to be selected. Although not shown in the accompanying drawings of the present application, it will be appreciated by those skilled in the art that the movement of the shifting synchronizers 106, 108 are capable of being manipulated, for example, via a shifting fork. The shifting fork is manually manipulated, for example, by the driver. Further, it will be appreciated that while the particular arrangement of the shifting gears in the examples of the present application is described, these arrangements are not limiting but may be selected by a user according to their design needs. For example, the shifting gears may be disposed sequentially on the gearshift shaft 105 in the order of first gear, second gear, third gear, and fourth gear. On the other hand, although the shifting gears of four gear positions are shown in the examples of the present application, variants of shifting gears with other numbers of gear positions are also included within the scope of the claims of the present application, and these numbers do not constitute any limitation. For example, it may comprise an additional fifth shifting gear, a reverse gear, and the like.

Further, as shown in FIG. 1, in the gearshift shaft 105, in the region opposite the gear bearings 109 to 112, one or a plurality of through-holes 113 are disposed, allowing communication between the hollow cavity of the gearshift shaft 105 and the gear bearings 109 to 112. By way of example and not limitation, the one or a plurality through-holes 113 are uniformly distributed along the circumferential direction of the gearshift shaft 105. By way of example and not limitation, the one or a plurality of through-holes 113 are also uniformly disposed along the axial direction of the gearshift shaft 105 in the region opposite the gear bearings in the gearshift shaft 105. By way of example and not limitation, all through-holes 113 are present only in the region opposite the gear bearings 109 to 112 in the gearshift shaft 105. By way of example and not limitation, the dimensions of these through-holes 113 (comprising at least the diameter of the through-holes) may be selected appropriately, for example, based on the lubrication requirements for the gear bearings 109 to 112. In other words, the dimensions of the through-holes 103 disposed for gear bearings of different shifting gears differ accordingly. For example, gear bearings of different shifting gears have different lubrication needs due to different rotational speeds. By way of example and not limitation, the cross-sectional shape of the openings of these through-holes 113 is circular, elliptical, and the like, and in actual fact, any shape is feasible. By way of example and not limitation, the through-holes 113 are cylindrical holes or other uniform post holes, the axial direction of the holes along the pathway of the through-holes 113 is perpendicular to the axial direction of the gearshift shaft 105 and coincides with the radial direction of the gearshift shaft 105. Of course, the axial direction of the holes is exemplary only and may not be perpendicular to the axial direction of the gearshift shaft 105 and may not even coincide with the radial direction of the gearshift shaft, as long as the lubricating oil injected into the hollow cavity of the gearshift shaft 105 is capable of smoothly lubricating the gear bearings 109 to 112. The lubrication process of the lubricating oil will be described in further detail later.

Further, as shown in FIG. 1, the lubricating oil injection mechanisms are respectively disposed at both ends 1052, 1054 of the gearshift shaft 105. In other words, in the examples of the present application, the gearshifting mechanism 1 comprises two lubricating oil injection mechanisms on the gearshift shaft 105 thereof, achieving bidirectional lubricating oil injection into the hollow cavity of the gearshift shaft 105. By way of example and not limitation, the two lubricating oil injection mechanisms, for example, as is known in the art, each comprise an oil injection port 1140, an oil path 1142 connected to the oil injection port 1140, and a lubricating oil pump 1144 supplying the lubricating oil to the oil path 1142. As is known by those skilled in the art, since one end of the gearshift shaft 105 typically needs to output power as an output end, in prior art, no lubricating oil injection mechanism may be installed at the position of the gearshift shaft as the output end. However, in the examples of the present application, neither end of the gearshift shaft 105 is directly used to output power as an output end, allowing the transmission mechanism 1 (which comprises the gearshift shaft and the shifting gears disposed thereon) to be mechanically disposed between the output gear shaft (not shown) and the power output gear (not shown), such that both ends of the gearshift shaft 105 are free ends without having to be connected to other members. Hence, in the examples of the present application, the oil path 1142 of the lubricating oil injection mechanisms is respectively disposed at both ends 1052, 1054 of the gearshift shaft 105, for example, disposed in an end cover engaged to the gearshift shaft 105 to seal the gearshifting mechanism 1. Such oil path design may, for example, be achieved by means of disposing various tortuous paths in the end cover as is known to those skilled in the art. By way of example and not limitation, the oil injection port 2240 is located at a terminal of the oil path and is directed toward the hollow cavity of the gearshift shaft 105. By way of example and not limitation, the oil injection port 1140 is configured, for example, at a position in the middle of the circular cross-section of the gearshift shaft 105. Further, by way of example and not limitation, the oil injection port 1140 is configured to disperse the lubricating oil into a cone of oil mist for injection such that the oil mist is capable of being injected in the circumferential direction in the hollow cavity onto the inner wall of the hollow cavity of the gearshift shaft 105, so as to achieve uniform lubrication. Of course, as other variants, any other positions of the oil injection port 1140 and mist shape of the lubricating oil (for example, columnar mist) are possible as defined by the scope of the claims.

Further, by way of example and not limitation, the lubricating oil injection mechanisms may, for example, not comprise the oil path 1142 as disposed in the end cover as in prior art, while the lubricating oil pump 1144 is directly connected to the oil injection port 1140 of the end cover for both ends 1052, 1054 of the gearshift shaft 105.

Further, in order to achieve uniform lubrication of all gear bearings 109 to 112, the through-holes 113 disposed in the gearshift shaft 105 in the region opposite the gear bearings 109 to 112 need to be lubricated by the lubricating oil. Hence, the lubrication oil injection mechanisms, for example, are each configured such that the furthest injection distance of the lubricating oil injected therefrom does not typically exceed 1/4 of the total length of the gearshift shaft. It will be appreciated here that the furthest injection distance refers to the distance from the position where the lubricating oil injected by each oil injection port comes into direct contact with the inner wall of the gearshift shaft 105 to the end of the gearshift shaft 105 corresponding to the oil injection port. The distance is measured along the axial direction of the gearshift shaft. As a variant, the lubricating oil injection mechanisms are, for example, each configured such that the furthest injection distance of the lubricating oil injected therefrom does not typically exceed the distance to the through-hole in the gearshift shaft 105 nearest to the oil injection port from which the lubricating oil is injected.

Further, as will be appreciated by those skilled in the art, the two oil injection ports 1140 are, for example, capable of each supplying oil through a corresponding lubricating oil pump 1144, in which case the lubricating oil injection by the two oil injection ports are relatively independent such that the two lubricating oil pumps 1144 are capable of adjusting the physical characteristics, for example, speed, oil volume, and the like, of the lubricating oil injected by the corresponding oil injection ports 1140 depending on the lubrication needs of the gearshift shaft 104. However, it may also be conceived that a single lubricating oil pump 1140 may also be used to simultaneously supply oil to both oil injection ports 1140. In this case, the lubricating oil injected by the two oil injection ports 1140 would have the same physical characteristics. Of course, it is also possible to consider using a single lubricating oil pump 1144 to simultaneously supply oil to the two oil injection ports 1140 and to dispose an adjustable valve (not shown) between each of the lubricating oil pumps and the corresponding oil injection port, such that the physical characteristics of the lubricating oil injected by the corresponding oil injection port 1140 may be adjusted based on the lubrication needs of the gear bearings 109 to 112 on the gearshift shaft 105, to allow the injection of the lubricating oil by the two oil injection ports 1140 to be relatively independent. Of course, those skilled in the art may conceive of various combinations of dispositions of the lubricating oil pumps and oil injection ports without departing from the scope of the present invention, as defined by the claims, for example, by having a single lubricating oil pump supply to two oil injection ports but disposing an adjustable valve between only one of the oil injection ports and the lubricating oil pump, by having two lubricating oil pumps supply to two oil injection ports as a combination, or other various oil supply structures.

Further, although the respective disposition of a single oil injection port 1040 at each end 1052, 1054 of the gearshift shaft 105 is shown in the examples of the present application, as a variant, a set of a plurality of oil injection ports may be respectively disposed at each end of the gearshift shaft without departing from the scope of the present invention. With a set of a plurality of oil injection ports respectively disposed at each end of the gearshift shaft 105, the set of a plurality of oil injection ports may be used as a whole to supply oil via the lubricating oil pump 1144. In this case, the lubricating oil injection control and supply of the set of a plurality of oil injection ports may be as described above. The set of a plurality of oil injection ports are uniformly distributed, for example about the axis of rotation of the gearshift shaft 105, such that the lubricating oil injected is capable of uniformly reaching the inner wall of the hollow cavity in the gearshift shaft 105.

Further, as will be appreciated by those skilled in the art, in the examples of the present application, the two lubricating oil injection mechanisms may be the same, but in certain examples, the components of the two lubricating oil injection mechanisms, such as the oil injection port 1140, the oil path 1142, and the lubricating oil pump (if there are two or more) may be the same or different. For example, the shape of the oil injection port 1140 and the oil injection shape may be the same or different. The oil path 1142 at both ends of the gearshift shaft 105 may be the same or different. Two or a plurality of lubricating oil pumps 1144 that supply to each of the oil injection ports 1140 may be the same or different, or the like. However, it is expected that these components are equally preferred, in which case, on one hand, would facilitate installation and commissioning, and on the other hand, make equal oil supply at both ends more easily achievable, thereby making it more advantageous to the control of the lubrication of the gear bearings 109 to 112.

Of course, as is known to those skilled in the art, the shifting gear mechanism 1 according to examples of the present invention naturally comprises a lubrication oil recovery mechanism (not shown). When the lubricating oil injected into the hollow cavity of the gearshift shaft 105 flows through the through-holes 113 into the various gear bearings 109 to 112 by means of the rotation of the gearshift shaft 105, further through the gap between the gear bearings 109 to 112 via the shifting gears 101 to 104, and spreads to the shifting gears 101 to 104 (and the gearshifting mechanism), on one hand, it is capable of supplementing the lubricating oil to other rotating components to ensure the lubrication effect, and on the other hand, it ensures that the oil of the gearshifting mechanism 1 is capable of being accumulated in the housing of the gearshifting mechanism 1. In this case, the lubrication oil recovery mechanism is capable of drawing in the accumulated lubricating oil to ensure the recycling of the lubricating oil. In this case, it may be determined that the lubricating oil pump 1144 comprises, on one hand, an oil outlet supplying oil to the oil injection port 1140 and, on the other hand, an oil inlet for the recovery of lubricating oil.

Such gearshifting mechanism 1 in the examples of the present invention may be disposed in the electric drive axle, wherein both ends 1052, 1054 of the gearshift shaft 105 of such gearshifting mechanism 1 according to the examples of the present invention have a space to dispose the two lubricating oil injection mechanisms, respectively, as described in the examples of the present application. In fact, such configuration ensures that the hollow cavity of the gearshift shaft 105 is capable of being injected with lubricating oil from two directions and that the gear bearings 109 to 112 on the gearshift shaft 105 are capable of being relatively uniformly lubricated as compared to prior art, where one end of the gearshift shaft is connected to other power transmission shafts. As compared to immersion lubrication, the technical solution of the present application reduces the total amount of lubricating oil required, thereby allowing a reduction in the weight of the entire electric drive axle; and compared to conventional one-sided oil injection lubrication, it allows for relatively uniform and adequate lubrication of each gear bearing, avoiding the problem of inadequate and non-uniform lubrication due to the different rotational speeds of the gearshift shaft 105. Hence, it is conceivable that the gearshifting mechanism is mechanically disposed between the motor output shaft gear and the power output shaft gear of the electric drive axle, such that both ends of the gearshift shaft 105 are free ends.

Further, by way of example and not limitation, an electric drive axle comprising such a gearshifting mechanism 1 is documented in the examples of the present invention for use in an electric vehicle.

Aspects of how to ensure relatively uniform and adequate lubrication of each gear bearing and how to control the supply of lubricating oil are described in detail below with respect to FIG. 3.

First, the lubrication process of injecting the lubricating oil into the hollow cavity of the gearshift shaft 105 is described herein to facilitate better understanding of the principles of the present application.

As the lubricating oil is injected through the oil injection port 1140 onto the inner walls of the hollow cavity, as the gearshift shaft 105 rotates based on the selected shifting gear selected based on the shifting synchronizers 106, 108, the lubricating oil in contact with the inner walls of the hollow cavity adheres more closely to the inner walls under the action of the centrifugal force generated by the rotation of the gearshift shaft 105 and therefore diffuses. On one hand, the continuous supply of lubricating oil and the action of the centrifugal force directs the lubricating oil to be axially diffused in a direction opposite to the oil injection port 1140 (away from the oil injection port along the axial direction herein), and on the other hand, the lubricating oil that flows through the through-holes 113 disposed on the gearshift shaft 105 under the action of the centrifugal force radially diffuses outwards along the through-holes 113 and flows to the gear bearings 109 to 112, thereby lubricating the gear bearings and further diffuses to the outside through the gap between the shifting gears 101 to 104 and the gear bearings 109 to 112 by means of the action of the centrifugal force and splashes onto other rotating components.

Hence, it may be determined that where the lubricating oil is injected at a constant oil injection volume at any rotational speed, when the gearshift shaft 105 rotates at a relatively low rotational speed due to the shifting gear selected being in a relatively low gear position, the action of the centrifugal force is relatively weak, so the lubricating oil adheres more easily onto the inner wall of the hollow cavity and the lubricating oil injected onto the inner wall of the hollow cavity can only diffuse along the axial direction relatively slowly. In this case, as the diffusion speed is relatively slow, such further through-holes may not be lubricated in a timely manner, which causes the wear and tear of the gear bearings corresponding to such further through-holes to worsen. On the other hand, where the lubricating oil is injected at a constant oil injection volume at any rotational speed, when the gearshift shaft rotates at a relatively high rotational speed due to the shifting gear selected being in a relatively high gear position, the action of the centrifugal force is relatively strong, so the lubricating oil on the inner wall of the hollow cavity diffuses relatively quickly along the axial direction, but because the action of the centrifugal force is relatively strong, the lubricating oil flows through the through-holes more quickly. Hence, in this case, through-holes further from the oil injection may not obtain adequate lubricating oil to lubricate the gear bearings, and only through-holes nearer to the oil injection port are able to obtain adequate lubricating oil to lubricate the gear bearings, which causes the wear and tear of the gear bearings corresponding to such further through-holes to worsen.

Based on the above principles, oil injection ports or lubricating oil injection mechanisms disposed on one side are known to have the problem of inadequate volume of lubricating oil at through-holes further from the oil injection port when the gearshift shaft rotates at a high speed and the problem of untimely lubrication of through-holes further from the oil injection port when the gearshift shaft rotates at a low speed. Based on this, such a gearshifting mechanism 1 as documented in the examples of the present application has significant advantages: As lubricating oil injection mechanisms are disposed at both ends of the gearshift shaft, when the gearshift shaft 105 rotates at a high speed, the lubricating oil from two directions at both ends of the gearshift shaft 105 is capable of respectively lubricating through-holes (as an example, the through-holes in the nearer half of the lubricating oil injection mechanisms in the gearshift shaft 105) nearer to the lubricating oil injection mechanism, allowing adequate lubrication of all the through-holes on the entire gearshift shaft 105 by the lubricating oil (as shown in FIG. 1, the left oil injection port is capable of adequately lubricating the through-holes corresponding to the third gear and the fourth gear (due to the high centrifugal force, the through-holes nearer to the oil injection port will obtain more lubricating oil) and the right oil injection port is capable of adequately lubricating the through-holes corresponding to the second gear and the first gear). When the gearshift shaft 105 rotates at a high speed, the lubricating oil from two directions at both ends of the gearshift shaft is capable of respectively lubricating through-holes (as an example, the through-holes in the nearer half of the lubricating oil injection mechanisms in the gearshift shaft) nearer to the lubricating oil injection mechanisms more quickly, allowing timely lubrication of all the through-holes on the entire gearshift shaft 105 by the lubricating oil in a timely manner (as shown in FIG. 1, the left oil injection port is capable of lubricating the through-holes corresponding to the third gear and the fourth gear in a timely manner (due to the high centrifugal force, the through-holes nearer to the oil injection port will obtain more timely lubrication) and the right oil injection port is capable of lubricating the through-holes corresponding to the second gear and the first gear in a timely manner).

While such a gearshifting mechanism 1 as shown in the examples of the present application achieves significant results due to the respective disposition of the lubricating oil injection mechanisms at both ends of the gearshift shaft 105, to achieve better and finer lubrication of the gear bearings, an oil injection control method for controlling the lubricating oil injection mechanisms in the gearshifting mechanism according to the present invention, i.e., a lubricating oil injection method with variable oil injection volume, is described below with reference to FIG. 3.

Based on the above description of the principles of the lubrication process for the injection of the lubricating oil on the gearshift shaft 105, the control method for controlling the oil injection of the lubricating oil pump 1144 in the gearshifting mechanism 1 according to the present invention is described in detail herein.

In step 300, the structural characteristic data of the gearshift shaft 105 is obtained. The structural characteristics of the gearshift shaft comprise, for example, position characteristics of the individual through-holes 113, dimension characteristics of the individual through-holes 113, dimension characteristics of the gearshift shaft 105, and the like.

In step 302, the rotational speed of the gearshift shaft 105 is obtained. In the scope of the present application, the rotational speed 105 is associated with the gear position selected by the driver or autonomous driving system and with the output rotational speed of the motor of the vehicle, so this step 302 may be transformed to obtaining the current gear position of the vehicle and the output rotational speed of the motor. Of course, the rotational speed of the gearshift shaft 105 may be directly measured based on a sensor.

In step 304, the current temperature of the gear bearing for the currently selected gear in the gearshift shaft 105 is obtained. As the gearshift shaft 105 is typically directly connected to the gear bearing, as a variant, this step 304 may be transformed to obtaining the current temperature of the gearshift shaft 105.

In step 306, the heat transfer coefficient, viscosity, and current temperature of the lubricating oil are obtained. Some of these physical characteristics associated with the lubricating oil are inherent to the lubricating oil and may therefore be obtained in advance. These physical characteristics associated with the lubricating oil are referred to as lubricating oil characteristics later. The current temperature of the lubricating oil may be estimated based on a combination of, for example, the heat transfer coefficient of the lubricating oil, the current temperature of the gear bearing for the currently selected gear in the gearshift shaft, and the obtained rotational speed of the gearshift shaft.

In step 308, the desired post-lubrication temperature of the gear bearing for the currently selected gear position in the gearshift shaft 105 is obtained. As the gearshift shaft 105 is typically directly connected to the gear bearing, as a variant, this step 308 may be transformed to obtaining the desired post-lubrication temperature of the gearshift shaft 105. In some examples, the desired temperature may, for example, be fixed, and may therefore be set directly in the predetermined computational model for controlling the lubricating oil injection mechanisms without having to be obtained separately and individually.

In step 310, through a predetermined computational model, the injection volume and injection speed of the lubricating oil injected by the lubricating oil injection mechanisms are determined and hence the corresponding oil flow rate and oil pressure output by the lubricating oil pump 1144 are determined for based on the obtained rotational speed of the gearshift shaft 105, the temperature of the gear bearing for the currently selected gear position in the gearshift shaft 105 (or the current temperature of the gearshift shaft), the lubricating oil characteristics, the obtained desired post-lubrication temperature of the gear bearing for the currently selected gear position in the gearshift shaft 105 (or the desired post-lubrication temperature of the gearshift shaft 105), and the obtained structural characteristic data of the gearshift shaft 105, such that the lubricating oil pump 1144 operates based on the determined oil flow rate and oil pressure, allowing on one hand, the injected lubricating oil to meet the desired temperature requirements, and on other hand, ensuring timely and uniform lubrication of all through-holes as far as possible.

As a variant, the injection volume and injection speed of the lubricating oil (therefore the oil flow rate and oil pressure output by the corresponding lubricating oil pump) may, for example, be pre-simulated and determined, through a predetermined computational model, for example, a simulation model, based on various current rotational speeds of the gearshift shaft 105, the temperature of the gear bearing for the various selected gear positions in the gearshift shaft 105 (or the current temperature of the gearshift shaft 105), lubricating oil characteristics, various desired post-lubrication temperatures of the gear bearing for the currently selected gear position in the gearshift shaft 105 (or the desired post-lubrication temperature of the gearshift shaft 105) and the obtained structural characteristic data of the gearshift shaft 105, and stored in a control device (not shown) for oil injection control of oil injection of lubricating oil injected in the gearshifting mechanism 1, such that the simulation results can be directly called up to determine the oil flow rate and oil pressure required for the operation of the lubricating oil pump 1144 without additional calculation by only determining the obtained current rotational speed of the gearshift shaft 105, the temperature of the gear bearing for the selected gear position in the gearshift shaft 105 (or the current temperature of the gearshift shaft 105), and the current temperature of the lubricating oil when controlling the lubricating oil injection mechanism 1. By way of example but not limitation, the injection volume and injection speed of the lubricating oil (therefore the oil flow rate and oil pressure output by the corresponding lubricating oil pump 1144) may be pre-simulated and determined, through a predetermined computational model, based on the various parameters described above (rotational speed, bearing temperature, lubricating oil characteristics, desired post-lubrication temperature, and structural characteristics) and such simulation results and the obtained current rotational speed of the gearshift shaft 105, temperature of the gear bearing for the selected gear position in the gearshift shaft 105 (or current temperature of the gearshift shaft 105) and the lubricating oil temperature may be stored in a correspondence table accordingly, such that the control device for oil injection control of oil injection by the lubricating oil injection mechanisms in the gearshifting mechanism 1144 is capable of directly calling up the simulation results in the correspondence table based on the obtained current rotational speed of the gearshift shaft 105, temperature of the gear bearing for the selected gear position in the gearshift shaft 105 (or the current temperature of the gearshift shaft 105) and the current temperature of the lubricating oil, to control the oil flow rate and oil pressure (and also the injection volume and injection rate of the lubricating oil) output by the lubricating oil pump 1144.

It will be appreciated that the constructions and/or methods described herein are exemplary in nature and that since many variants are possible, these particular examples or typical examples should not be considered to have a limiting meaning. A particular routine or method described herein may represent one or a plurality of any number of handling strategies. As such, the various actions shown and/or described may be performed in the order shown and/or described, in other orders, in parallel, or omitted. Likewise, the order of the methods described above may be changed.

Although the examples of the present invention are described above with reference to the accompanying drawings, those skilled in the art are capable of making various modifications or substitutions to the above examples in accordance with the scope of the claims.

## Claims

1. A gearshifting mechanism (1), comprising:
shifting gears (101, 102, 103, 104),
a gearshift shaft (105);
shifting synchronizers (106, 108);
gear bearings (109, 110, 111, 112); and
lubricating oil injection mechanisms;
wherein the shifting gears (101, 102, 103, 104) are socketed onto the gearshift shaft (105) via the gear bearings (109, 110, 111, 112);
wherein the shifting gears (101, 102, 103, 104) engage and rotate with the gearshift shaft (105) according to a desired gear position by means of the shifting synchronizers (106, 108);
wherein in the gearshift shaft (105), in the region opposite the gear bearings (109, 110, 111, 112), one or a plurality of through-holes (113) are disposed, allowing communication between a hollow cavity of the gearshift shaft (105) and the gear bearings (109, 110, 111, 112); and
**characterized in that** the lubricating oil injection mechanisms are respectively disposed at both ends (1052, 1054) of the gearshift shaft (105), enabling bidirectional lubricating oil injection into the hollow cavity of the gearshift shaft (105).

2. The gearshifting mechanism (1) according to claim 1, wherein the one or plurality of through-holes (113) are disposed uniformly along the axial direction and/or circumferential direction of the gearshift shaft (105) in the region opposite the gear bearings (109, 110, 111, 112) within the gearshift shaft (105).

3. The gearshifting mechanism (1) according to claim 1, wherein the one or plurality of through-holes (113) are cylindrical holes, and wherein the axial direction of the holes along a pathway of the one or plurality of through-holes (113) is perpendicular to the axial direction of the gearshift shaft (105) and coincides with the radial direction of the gearshift shaft (105).

4. A gearshifting mechanism (1) according to claim 1, wherein the lubricating oil injection mechanisms each include at least an oil injection port (1140) and a lubricating oil pump (1144) supplying the lubricating oil; wherein the oil injection port (1140) is directed toward the hollow cavity of the gearshift shaft (105) and is at a position in the middle of the circular cross-section of the gearshift shaft (105).

5. The gearshifting mechanism (1) according to claim 4, wherein the oil injection port (1140) is configured to disperse the lubricating oil into a cone of oil mist for injection such that the oil mist is capable of being injected in the circumferential direction in the hollow cavity onto the inner wall of the gearshift shaft (105).

6. The gearshifting mechanism (1) according to claim 5, wherein the lubricating oil injection mechanisms are each configured such that the furthest injection distance of the lubricating oil injected therefrom does not exceed 1/4 of the total length of the gearshift shaft (105).

7. The gearshifting mechanism (1) according to claim 5, wherein the lubricating oil injection mechanisms are each configured such that the furthest injection distance of the lubricating oil injected therefrom does not exceed the distance to the through-hole in the gearshift shaft (105) nearest to the oil injection port from which the lubricating oil is injected.

8. An electric drive axle comprising the gearshifting mechanism (1) according to any one of claims 1 to 7, wherein the gearshifting mechanism (1) is mechanically disposed between the motor output shaft gear and the power output shaft gear of the electric drive axle, such that both ends of the gearshift shaft (105) are free ends.

9. An oil injection control method for a gearshifting mechanism (1), wherein the gearshifting mechanism (1) is any one of the gearshifting mechanisms (1) according to any one of claims 1 to 7, and the method comprises
obtaining the structural characteristic data of the gearshift shaft (105);
obtaining the rotational speed of the gearshift shaft (105);
obtaining the current temperature of the gear bearing of the currently selected gear position in the gearshift shaft (105);
obtaining lubricating oil characteristics, which comprise, for example, the heat transfer coefficient, viscosity, and current temperature of the lubricating oil;
obtaining the desired post-lubrication temperature of the gear bearing for the currently selected gear position in the gearshift shaft (105);
determining, through a predetermined computational model, the injection volume and injection speed of the lubricating oil injected by the lubricating oil injection mechanisms and hence determining the corresponding oil flow rate and oil pressure output by the lubricating oil pump (1144) based on the obtained rotational speed of the gearshift shaft (105), the temperature of the gear bearing for the currently selected gear position in the gearshift shaft (105), the lubricating oil characteristics, the obtained desired post-lubrication temperature of the gear bearing for the currently selected gear position in the gearshift shaft (105), and the obtained structural characteristic data of the gearshift shaft (105).

10. The oil injection control method according to claim 9, wherein the injection volume and injection speed of the lubricating oil injected by the lubricating oil injection mechanisms, as well as the corresponding oil flow rate and oil pressure output by the lubricating oil pump (1144), are pre-simulated and determined based on the rotational speed of the gearshift shaft (104), the temperature of the gear bearing for the currently selected gear position in the gearshift shaft (105), the lubricating oil characteristics, the desired post-lubrication temperature of the gear bearing for the currently selected gear position in the gearshift shaft (105), and the structural characteristic data of the gearshift shaft (105), and the simulation results corresponding to the rotational speed of the gearshift shaft (105), the current temperature of the gear bearing for the currently selected gear position in the gearshift shaft (105), and the current temperature of the lubricating oil are stored in a correspondence table, such that the corresponding simulation results can be called up.

## Patentansprüche

1. Gangschaltmechanismus (1), umfassend:
Schaltzahnräder (101, 102, 103, 104),
eine Schaltwelle (105);
Schaltsynchronisierer (106, 108);
Zahnradlager (109, 110, 111, 112); und
Schmieröleinspritzmittel;
wobei die Schaltzahnräder (101, 102, 103, 104) mittels der Zahnradlager (109, 110, 111, 112) auf der Schaltwelle (105) gelagert sind;
wobei die Schaltzahnräder (101, 102, 103, 104) mit der Schaltwelle (105) gemäß einer gewünschten Gangposition mittels der Schaltsynchronisierer (106, 108) in Eingriff stehen und sich mit dieser drehen;
wobei in der Schaltwelle (105) in dem den Zahnradlagern (109, 110, 111, 112) gegenüberliegenden Bereich ein Durchgangsloch oder eine Mehrzahl von Durchgangslöchern (113) angeordnet ist bzw. sind, wodurch eine Verbindung zwischen einem Hohlraum der Schaltwelle (105) und den Zahnradlagern (109, 110, 111, 112) ermöglicht wird; und
**dadurch gekennzeichnet, dass** die Schmieröleinspritzmittel jeweils an einem der beiden Enden (1052, 1054) der Schaltwelle (105) angeordnet sind, wodurch eine bidirektionale Schmieröleinspritzung in den Hohlraum der Schaltwelle (105) ermöglicht wird.

2. Gangschaltmechanismus (1) nach Anspruch 1, wobei das eine Durchgangsloch oder die Mehrzahl von Durchgangslöchern (113) innerhalb der Schaltwelle (105) in dem den Zahnradlagern (109, 110, 111, 112) gegenüberliegenden Bereich gleichmäßig in Axial- und/oder Umfangsrichtung der Schaltwelle (105) angeordnet sind.

3. Gangschaltmechanismus (1) nach Anspruch 1, wobei das eine Durchgangsloch oder die Mehrzahl von Durchgangslöchern (113) zylindrische Löcher sind und wobei die axiale Richtung der Löcher entlang eines Pfades des einen Durchgangslochs oder der Mehrzahl von Durchgangslöchern (113) senkrecht zur axialen Richtung der Schaltwelle (105) ist und mit der radialen Richtung der Schaltwelle (105) zusammenfällt.

4. Gangschaltmechanismus (1) nach Anspruch 1, wobei die Schmieröleinspritzmittel jeweils mindestens eine Öleinspritzöffnung (1140) und eine Schmierölpumpe (1144) beinhalten, die das Schmieröl zuführt; wobei die Öleinspritzöffnung (1140) auf den Hohlraum der Schaltwelle (105) gerichtet ist und sich an einer Position in der Mitte des kreisförmigen Querschnitts der Schaltwelle (105) befindet.

5. Gangschaltmechanismus (1) nach Anspruch 4, wobei die Öleinspritzöffnung (1140) dazu ausgelegt ist, das Schmieröl zur Einspritzung in Form eines Ölnebelkegels zu dispergieren, so dass der Ölnebel in dem Hohlraum in Umfangsrichtung auf die Innenwand der Schaltwelle (105) gespritzt werden kann.

6. Gangschaltmechanismus (1) nach Anspruch 5, wobei die Schmieröleinspritzmittel jeweils dazu ausgelegt sind, Schmieröl so einzuspritzen, dass dessen maximale Einspritzreichweite 1/4 der Gesamtlänge der Schaltwelle (105) nicht überschreitet.

7. Gangschaltmechanismus (1) nach Anspruch 5, wobei die Schmieröleinspritzmittel jeweils dazu ausgelegt sind, Schmieröl so einzuspritzen, dass dessen maximale Einspritzreichweite den Abstand zum Durchgangsloch in der Schaltwelle (105), das der Öleinspritzöffnung, aus der das Schmieröl eingespritzt wird, am nächsten liegt, nicht überschreitet.

8. Elektrische Antriebsachse, umfassend den Gangschaltmechanismus (1) nach einem der Ansprüche 1 bis 7, wobei der Gangschaltmechanismus (1) mechanisch zwischen dem Zahnrad der Motorabtriebswelle und dem Zahnrad der Leistungsabtriebswelle der elektrischen Antriebsachse angeordnet ist, so dass beide Enden der Schaltwelle (105) freie Enden sind.

9. Öleinspritzsteuerungsverfahren für einen Gangschaltmechanismus (1), wobei der Gangschaltmechanismus (1) einer der Gangschaltmechanismen (1) nach einem der Ansprüche 1 bis 7 ist und das Verfahren Folgendes umfasst:
Erhalten der strukturellen Kenndaten der Schaltwelle (105);
Erhalten der Drehzahl der Schaltwelle (105);
Erhalten der aktuellen Temperatur des Zahnradlagers der aktuell gewählten Gangposition in der Schaltwelle (105);
Erhalten von Schmieröleigenschaften, die beispielsweise den Wärmeübertragungskoeffizienten, die Viskosität und die aktuelle Temperatur des Schmieröls umfassen;
Erhalten der Solltemperatur des Zahnradlagers für die aktuell gewählte Gangposition in der Schaltwelle (105) nach der Schmierung;
Bestimmen des Einspritzvolumens und der Einspritzgeschwindigkeit des durch die Schmieröleinspritzmittel eingespritzten Schmieröls mithilfe eines vorbestimmten Rechenmodells und somit Bestimmen der entsprechenden Öldurchflussrate und des entsprechenden Öldrucks, die von der Schmierölpumpe (1144) abgegeben werden, basierend auf der erhaltenen Drehzahl der Schaltwelle (105), der Temperatur des Zahnradlagers für die aktuell gewählte Gangposition in der Schaltwelle (105), den Schmieröleigenschaften, der erhaltenen Solltemperatur des Zahnradlagers für die aktuell gewählte Gangposition in der Schaltwelle (105) nach der Schmierung und den erhaltenen strukturellen Kenndaten der Schaltwelle (105).

10. Öleinspritzsteuerungsverfahren nach Anspruch 9, wobei das Einspritzvolumen und die Einspritzgeschwindigkeit des von den Schmieröleinspritzmitteln eingespritzten Schmieröls sowie die entsprechende Öldurchflussrate und der entsprechende Öldruck, die von der Schmierölpumpe (1144) abgegeben werden, basierend auf der Drehzahl der Schaltwelle (104), der Temperatur des Zahnradlagers für die aktuell gewählte Gangposition in der Schaltwelle (105), den Schmieröleigenschaften, der Solltemperatur des Zahnradlagers für die aktuell gewählte Gangposition in der Schaltwelle (105) nach der Schmierung und den strukturellen Kenndaten der Schaltwelle (105) vorab simuliert und bestimmt werden und die der Drehzahl der Schaltwelle (105), der aktuellen Temperatur des Zahnradlagers für die aktuell gewählte Gangposition in der Schaltwelle (105) und der aktuellen Temperatur des Schmieröls entsprechenden Simulationsergebnisse in einer Entsprechungstabelle gespeichert werden, so dass die entsprechenden Simulationsergebnisse abgerufen werden können.

## Revendications

1. Mécanisme de changement de vitesse (1), comprenant :
un changement de vitesse (101, 102, 103, 104),
un arbre de changement de vitesse (105) ;
des synchroniseurs de changement de vitesse (106, 108) ;
des paliers d'engrenage (109, 110, 111, 112) ; et
des mécanismes d'injection d'huile de lubrification ;
dans lequel le changement de vitesse (101, 102, 103, 104) est emboîté sur l'arbre de changement de vitesse (105) par l'intermédiaire des paliers d'engrenage (109, 110, 111, 112) ;
dans lequel le changement de vitesse (101, 102, 103, 104) s'engrène et tourne avec l'arbre de changement de vitesse (105) en fonction d'une position de vitesse souhaitée au moyen des synchroniseurs de changement de vitesse (106, 108) ;
dans lequel dans l'arbre de changement de vitesse (105), dans la région opposée aux paliers d'engrenage (109, 110, 111, 112), un ou plusieurs trous traversants (113) sont disposés, permettant une communication entre une cavité creuse de l'arbre de changement de vitesse (105) et les paliers d'engrenage (109, 110, 111, 112) ; et
**caractérisé en ce que** les mécanismes d'injection d'huile de lubrification sont disposés respectivement au niveau des deux extrémités (1052, 1054) de l'arbre de changement de vitesse (105), permettant une injection d'huile de lubrification bidirectionnelle dans la cavité creuse de l'arbre de changement de vitesse (105).

2. Mécanisme de changement de vitesse (1) selon la revendication 1, dans lequel les un ou plusieurs trous traversants (113) sont disposés uniformément le long de la direction axiale et/ou la direction circonférentielle de l'arbre de changement de vitesse (105) dans la région opposée aux paliers de vitesse (109, 110, 111, 112) à l'intérieur de l'arbre de changement de vitesse (105).

3. Mécanisme de changement de vitesse (1) selon la revendication 1, dans lequel les un ou plusieurs trous traversants (113) sont des trous cylindriques, et dans lequel la direction axiale des trous le long d'un trajet des un ou plusieurs trous traversants (113) est perpendiculaire à la direction axiale de l'arbre de changement de vitesse (105) et coïncide avec la direction radiale de l'arbre de changement de vitesse (105).

4. Mécanisme de changement de vitesse (1) selon la revendication 1, dans lequel les mécanismes d'injection d'huile de lubrification incluent chacun au moins un orifice d'injection d'huile (1140) et une pompe à huile de lubrification (1144) apportant en huile de lubrification ; dans lequel l'orifice d'injection d'huile (1140) est dirigé vers la cavité creuse de l'arbre de changement de vitesse (105) et est au niveau d'une position au milieu de la section transversale circulaire de l'arbre de changement de vitesse (105).

5. Mécanisme de changement de vitesse (1) selon la revendication 4, dans lequel l'orifice d'injection d'huile (1140) est configuré pour disperser l'huile de lubrification en un cône de brouillard d'huile pour injection de telle sorte que le brouillard d'huile puisse être injecté dans la direction circonférentielle dans la cavité creuse sur la paroi interne de l'arbre de changement de vitesse (105).

6. Mécanisme de changement de vitesse (1) selon la revendication 5, dans lequel les mécanismes d'injection d'huile de lubrification sont chacun configurés de telle sorte que la distance d'injection la plus éloignée de l'huile de lubrification injectée à partir de ceux-ci ne dépasse pas 1/4 de la longueur totale de l'arbre de changement de vitesse (105).

7. Mécanisme de changement de vitesse (1) selon la revendication 5, dans lequel les mécanismes d'injection d'huile de lubrification sont chacun configurés de telle sorte que la distance d'injection la plus éloignée de l'huile de lubrification injectée à partir de ceux-ci ne dépasse pas la distance jusqu'au trou traversant dans l'arbre de changement de vitesse (105) le plus proche de l'orifice d'injection d'huile à partir duquel l'huile de lubrification est injectée.

8. Essieu moteur électrique comprenant le mécanisme de changement de vitesse (1) selon l'une quelconque des revendications 1 à 7, le mécanisme de changement de vitesse (1) étant disposé mécaniquement entre l'engrenage d'arbre de sortie de moteur et l'engrenage d'arbre de sortie de puissance de l'essieu moteur électrique, de telle sorte que les deux extrémités de l'arbre de changement de vitesse (105) soient des extrémités libres.

9. Procédé de commande d'injection d'huile pour un mécanisme de changement de vitesse (1), le mécanisme de changement de vitesse (1) étant l'un quelconque des mécanismes de changement de vitesse (1) selon l'une quelconque des revendications 1 à 7, et le procédé comprenant
l'obtention des données caractéristiques structurelles de l'arbre de changement de vitesse (105) ;
l'obtention de la vitesse de rotation de l'arbre de changement de vitesse (105) ;
l'obtention de la température actuelle du palier d'engrenage de la position de vitesse actuellement sélectionnée dans l'arbre de changement de vitesse (105) ;
l'obtention de caractéristiques d'huile de lubrification, qui comprennent, par exemple, le coefficient de transfert de chaleur, la viscosité, et la température actuelle de l'huile de lubrification ;
l'obtention de la température post-lubrification souhaitée du palier d'engrenage pour la position de vitesse actuellement sélectionnée dans l'arbre de changement de vitesse (105) ;
la détermination, par le biais d'un modèle de calcul prédéterminé, du volume d'injection et de la vitesse d'injection de l'huile de lubrification injectée par les mécanismes d'injection d'huile de lubrification et de là la détermination du débit d'huile et de la pression d'huile correspondants fournis par la pompe à huile de lubrification (1144) sur la base de la vitesse de rotation obtenue de l'arbre de changement de vitesse (105), de la température du palier d'engrenage pour la position de vitesse actuellement sélectionnée dans l'arbre de changement de vitesse (105), des caractéristiques d'huile de lubrification, de la température post-lubrification souhaitée obtenue du palier d'engrenage pour la position de vitesse actuellement sélectionnée dans l'arbre de changement de vitesse (105), et des données caractéristiques structurelles obtenues de l'arbre de changement de vitesse (105).

10. Procédé de commande d'injection d'huile selon la revendication 9, dans lequel le volume d'injection et la vitesse d'injection de l'huile de lubrification injectée par les mécanismes d'injection d'huile de lubrification, ainsi que le débit d'huile et la pression d'huile correspondants fournis par la pompe à huile de lubrification (1144), sont pré-simulés et déterminés sur la base de la vitesse de rotation de l'arbre de changement de vitesse (104), de la température du palier d'engrenage pour la position de vitesse actuellement sélectionnée dans l'arbre de changement de vitesse (105), des caractéristiques d'huile de lubrification, de la température post-lubrification souhaitée du palier d'engrenage pour la position de vitesse actuellement sélectionnée dans l'arbre de changement de vitesse (105), et des données caractéristiques structurelles de l'arbre de changement de vitesse (105), et les résultats de simulation correspondant à la vitesse de rotation de l'arbre de changement de vitesse (105), à la température actuelle du palier d'engrenage pour la position de vitesse actuellement sélectionnée dans l'arbre de changement de vitesse (105), et à la température courante de l'huile de lubrification sont stockés dans une table de correspondance, de telle sorte que les résultats de simulation correspondants puissent être appelés.
